# EUROPEAN PATENT SPECIFICATION

(11) **EP 3 937 704 B1**
(45) Date of publication and mention of the grant of the patent: **01.05.2024**
(21) Application number: 20714858.6
(22) Date of filing: 09.03.2020
(51) Int. Cl.: A24F 40/51, A24F 40/57

(54) **AEROSOL PROVISION DEVICE**
AEROSOL ERZEUGENDE VORRICHTUNG
DISPOSITIF GÉNÉRATEUR D'AÉROSOL

(30) Priority: 11.03.2019 US 201962816270 P
(43) Date of publication of application: 19.01.2022
(60) Divisional application: 24163358.5
(73) Proprietor: Nicoventures Trading Limited, London Greater London WC2R 3LA (GB)
(72) Inventor: HALLIDAY, Edward Joseph, London Greater London WC2R 3LA (GB); SAYED, Ashley John, London Greater London WC2R 3LA (GB); THORSEN, Mitchel, Madison, Wisconsin 53718 (US); WARREN, Luke James, London Greater London WC2R 3LA (GB); WOODMAN, Thomas Alexander John, London Greater London WC2R 3LA (GB)
(74) Representative: Dehns
(86) International application number: PCT/EP2020/056229
(87) International publication number: WO 2020/182739

(56) References cited:
- WO-A1-2018/203044
- CA-A1- 3 022 233
- CA-A1- 3 043 272
- US-A1- 2017 207 499

## Description

### Technical Field

The present invention relates to an aerosol provision device.

### Background

Smoking articles such as cigarettes, cigars and the like burn tobacco during use to create tobacco smoke. Attempts have been made to provide alternatives to these articles that burn tobacco by creating products that release compounds without burning. Examples of such products are heating devices which release compounds by heating, but not burning, the material. The material may be for example tobacco or other non-tobacco products, which may or may not contain nicotine.

WO 2018/203044 A1 discloses an electronic aerosol provision system comprising: a vaporiser for generating an aerosol using electrical power; a battery for supplying electrical power to the vaporiser and to other components of the electronic aerosol provision system; a flat, flexible cable having a laminated structure and incorporating multiple conductor lines for transmitting electrical power and/or signals; and a temperature sensor incorporated into the flat, flexible cable and located adjacent the battery for sensing the temperature of the battery. The electronic aerosol provision system is configured to detect an error condition if the sensed temperature of the battery goes outside a specified operating range and in response to such detection, to reduce or cease the supply of electrical power from the battery.

### Summary

According to a first aspect of the present disclosure, there is provided an aerosol provision device, comprising:
a battery;
a battery support configured to engage and hold the battery;
a resilient component arranged between the battery support and the battery; and
a temperature sensor at least partially contained within the resilient component, wherein the temperature sensor is configured to measure a temperature of the battery; and
wherein at least one of the temperature sensor and resilient component abuts the battery.

Further features and advantages of the invention will become apparent from the following description of preferred embodiments of the invention, given by way of example only, which is made with reference to the accompanying drawings.

### Brief Description of the Drawings

Figure 1 shows a front view of an example of an aerosol provision device;
Figure 2 shows a front view of the aerosol provision device of Figure 1 with an outer cover removed;
Figure 3 shows a cross-sectional view of the aerosol provision device of Figure 1;
Figure 4 shows an exploded view of the aerosol provision device of Figure 2;
Figure 5A shows a cross-sectional view of a heating assembly within an aerosol provision device;
Figure 5B shows a close-up view of a portion of the heating assembly of Figure 5A;
Figure 6 shows a battery and a battery support according to an example;
Figure 7 shows a close up of the battery support of Figure 6 and a resilient component adhered to the battery support; and
Figure 8 shows the battery support of Figure 7 before the resilient component is adhered to the battery support.

### Detailed Description

As used herein, the term "aerosol generating material" includes materials that provide volatilised components upon heating, typically in the form of an aerosol. Aerosol generating material includes any tobacco-containing material and may, for example, include one or more of tobacco, tobacco derivatives, expanded tobacco, reconstituted tobacco or tobacco substitutes. Aerosol generating material also may include other, non-tobacco, products, which, depending on the product, may or may not contain nicotine. Aerosol generating material may for example be in the form of a solid, a liquid, a gel, a wax or the like. Aerosol generating material may for example also be a combination or a blend of materials. Aerosol generating material may also be known as "smokable material".

Apparatus is known that heats aerosol generating material to volatilise at least one component of the aerosol generating material, typically to form an aerosol which can be inhaled, without burning or combusting the aerosol generating material. Such apparatus is sometimes described as an "aerosol generating device", an "aerosol provision device", a "heat-not-burn device", a "tobacco heating product device" or a "tobacco heating device" or similar. Similarly, there are also so-called e-cigarette devices, which typically vaporise an aerosol generating material in the form of a liquid, which may or may not contain nicotine. The aerosol generating material may be in the form of or be provided as part of a rod, cartridge or cassette or the like which can be inserted into the apparatus. A heater for heating and volatilising the aerosol generating material may be provided as a "permanent" part of the apparatus.

An aerosol provision device can receive an article comprising aerosol generating material for heating. An "article" in this context is a component that includes or contains in use the aerosol generating material, which is heated to volatilise the aerosol generating material, and optionally other components in use. A user may insert the article into the aerosol provision device before it is heated to produce an aerosol, which the user subsequently inhales. The article may be, for example, of a predetermined or specific size that is configured to be placed within a heating chamber of the device which is sized to receive the article.

A first aspect of the present disclosure defines an aerosol provision device comprising a battery, a battery support and a temperature sensor arranged to measure a temperature of the battery. The battery support may be a substantially rigid structure which engages the battery and holds it in place with the aerosol provision device. One or more other components of the device may be attached to the battery support.

In some aerosol provision devices, it is often useful to measure the temperature of the battery while it the device is being used to ensure that the battery does not overheat. For example, to ensure that the battery temperature does not go above a predetermined temperature threshold, such as 35°C, 36°C, 40°C, 45°C or 50°C. If the battery becomes too hot it may impact the performance or lifetime of the battery, and may even render the battery unsafe. A battery can overheat due to inadequate cooling or due to a hot environment. This problem can be exacerbated in an aerosol provision device which comprises a heater assembly (such as one or more inductor coils which heat a susceptor). The heater assembly may be in thermal proximity to the battery such that the battery is additionally heated by the heater assembly. For example, as the susceptor is heated (between about 240°C and about 280°C) the temperature of the battery may increase. It is therefore important to monitor the temperature of the battery.

The heater assembly may be operated based on the measured temperature. For example, if the battery becomes too hot during heating, the heater assembly may be switched off. If the battery is too hot before the heater assembly is switched on, the device may not allow the heater assembly switch on.

In certain applications it is desirable for the temperature sensor to be connected to or be in contact with the battery. However, in portable devices, such as an aerosol provision device, it has been found that the relative positioning between the temperature sensor and battery can change over time. This can result in the temperature sensor measuring an incorrect/inaccurate battery temperature. For example, if the device is dropped or otherwise impacted, the temperature sensor may lose contact with the battery. For example, a temperature sensor may be welded or otherwise be mechanically connected to the battery. If the device experiences an impact force, the connection may break such that the temperature sensor is disconnected from the battery. Because of this, the temperature measured by the sensor can be lower than the actual temperature of the battery. The battery can therefore operate above a safe temperature without the device being aware that the temperature sensor is measuring a lower temperature. It is therefore desirable to ensure that the temperature sensor positioning relative to the battery remains constant over time so that recorded temperatures are more accurate of the true battery temperature.

To solve this problem, the temperature sensor can be at least partially contained within a resilient component/material which holds the temperature sensor in thermal proximity to the battery. For example, a resilient component may be adhered to the battery support, and be arranged between the battery support and the battery. At least one of the resilient component and temperature sensor are in contact with the battery so that the battery temperature can be measured. The resilient component can deform as forces are applied to the device and the malleable nature of the resilient component means that the relative positioning between the temperature sensor and battery is less likely to change substantially over time. For example, because the temperature sensor is not connected to the battery (via welding for example), there are no connections to damage/break. The resilient component holds the temperature sensor in position and absorbs any forces which are applied to the device without itself being damaged. This means that the temperature sensor is more likely to record a true temperature of the battery over the lifetime of the device, so that the device can operate more efficiently and safely.

The resilient nature can also allow the resilient component to conform to the outer surface shape of the battery so that the contact area between the battery and resilient component remains substantially the same as it deforms.

As mentioned, the temperature sensor is at least partially contained/embedded/submerged/encapsulated within the resilient component. In some examples the temperature sensor is fully contained within the resilient component, and the resilient component abuts the battery. If the temperature sensor is fully contained within the resilient component it will not be in contact with the battery. Instead, heat from the battery can thermally conduct through the resilient component. The temperature sensor may therefore be less likely to be damaged because the resilient component can absorb any impact forces. Furthermore, the temperature sensor may be less likely to be exposed to moisture or other environmental factors which can affect the performance of the temperature sensor.

In other examples, a first portion of the temperature sensor may be contained within the resilient component and a second portion of the temperature sensor may abut the battery. Thus, the temperature sensor may be partially contained within the resilient component. When the temperature sensor is in contact with the battery it may provide a more accurate temperature reading because less heat is lost to the surroundings. In such examples, the resilient component may also be in contact with the battery and heat may also conduct through the resilient component.

In some examples the surface of the resilient component which contacts the battery is not adhered to the battery.

As briefly mentioned, in some examples the resilient component may be thermally conductive. This can be particularly beneficial in arrangements where the resilient component abuts/is in contact with the battery. A thermally conductive resilient member provides an increased surface area over which to measure the temperature of the battery.

In a particular example, the resilient component has a thermal conductivity of greater than about 5W/mK. A thermal conductivity above this value allows heat to efficiently flow towards the temperature sensor. In another example, the resilient component has a thermal conductivity of greater than about 5W/mK and less than about 10W/mK. Preferably the resilient component has a thermal conductivity of about 7W/mK. In certain examples, materials with even higher thermal conductivities can become expensive.

In some examples the resilient component is electrically insulating to avoid shorting the battery.

In certain arrangements, the battery support defines a receptacle, and the resilient component is received within the receptacle. For example, the battery support may comprise a cavity in which the resilient component (and temperature sensor) are held. The receptacle/cavity can allow the resilient component to be more securely attached to the battery support. For example, sidewalls of the cavity may increase the contact area between the battery support and resilient component. The receptacle/cavity can also provide better thermal insulation from other nearby heat sources so that the temperature sensor can record the temperature of the battery. The receptacle/cavity can also allow the battery to better conform to the battery support. By being located within the receptacle, the temperature sensor and resilient component provide less of an obstruction between the battery support and battery so that the battery can be held more securely.

In some examples the resilient component comprises silicone. The resilient component may therefore comprise polysiloxanes. Silicone is a good conductor of heat and is resilient in nature. In a particular example, the resilient component is Compatherm^{®}, which is commercially available from Nolato^{®} AB of Sweden. Compatherm^{®} has a thermal conductivity of about 7W/mK and can be compressed beyond 50% of its original thickness, and so it particularly suitable for this application.

In some examples, the resilient component comprises conductive epoxy.

In some examples, the resilient component contacts the battery over an area of between about 15mm² and about 25mm². It has been found that this contact area allows the temperature sensor to be adequately supported and provides a good thermal bridge between the temperature sensor and battery to more accurately measure the temperature of the battery. The resilient component may have a substantially square or rectangular shaped surface which contacts the battery. For example, a first length of the rectangle may be about 5mm and a second length may be about 4mm. Alternatively, the first length of the square may be about 4mm and a second length may be about 4mm. In other examples the resilient component may have a circular, elliptical or irregular shaped surface which is in contact with the battery.

As briefly mentioned, the device may also comprise a heater assembly configured to heat aerosol generating material. The device may also comprise a controller, such as a processor, which is configured to:
cause the heater assembly to start heating the aerosol generating material;
determine, based on the temperature measured by the temperature sensor, whether the temperature of the battery exceeds a first threshold; and
if it is determined that the temperature of the battery exceeds the first threshold, cause the heater assembly to stop heating the aerosol generating material.

Thus, the device may have a safety/performance feature which stops the heater assembly from operating if the battery becomes too hot. The first threshold may be between about 45 °C and about 50 °C, for example.

In another example, the first threshold may be between about 30 °C and about 40 °C, such as between about 35 °C and about 40 °C. In one example, the first threshold is about 36°C. If the first threshold is too low, such as less than about 30 °C, it would reduce the number of back-to-back heating sessions that could be performed. If the first threshold is too high, the outer cover/surface of the device may become too hot. Thresholds within this range provide a good balance between these considerations.

The controller may determine the temperature of the battery a plurality of times during heating. The temperature may be repeated periodically, such as less than every 10 seconds, less than every 5 seconds, less than every 1 second, less than every 0.5 second, or less than every 0.1 seconds for example.

The controller may be configured to:
cause the heater assembly to start heating the aerosol generating material only if it is determined that the temperature of the battery is below a second threshold;
wherein the second threshold is less than the first threshold.

Thus, as briefly mentioned above, if the battery is already too hot, the heater assembly may not begin to heat the aerosol generating material because it may be assumed that it is likely that the battery temperature will soon increase above the first threshold. The second threshold may be between about 5 °C and about 10 °C less than the first threshold.

In a particular example the first threshold is 50 °C and the second threshold is 45 °C.

In a particular example the temperature sensor is a thermistor.

Preferably, the temperature sensor is located at a midpoint along the length of the battery. This can provide a more accurate temperature measurement.

The above describes a device in which a temperature sensor is used to determine a temperature of the battery. This solution provides advantages over devices in which the battery comprises a temperature sensor. For example, the battery may comprise a Protection Circuit Module (PCM) which can automatically sense the temperature of the battery. Batteries with PCMs can be larger, or longer in length, which results in a larger or longer device. The use of an external temperature sensor allows the device to be made smaller.

In one arrangement the battery support is positioned between the heater assembly and the battery, and the battery support is thermally insulating (for example, has a thermal conductivity of less than about 0.5W/mK). The battery support can therefore act as a thermal barrier so that the temperature sensor can more accurately record the temperature of the battery.

In the above examples, a device comprises a resilient component and a temperature sensor at least partially contained within the resilient component. As an alternative arrangement, the resilient component may be a spring or other biasing component, where the resilient component biases the temperature sensor towards the battery. Accordingly, the temperature sensor is not contained within the resilient component in some examples.

In the above examples, the temperature sensor is used to measure the temperature of the battery. In other examples, the temperature sensor may be arranged to measure other components of the device, such as an insulating member, inductor coil, or electrical connector, such as a USB connector. Accordingly, in other examples, there is provided an aerosol provision device, comprising an inductor coil arranged to heat a susceptor, a resilient component adhered to the inductor coil, and a temperature sensor at least partially contained within the resilient component, wherein the temperature sensor is configured to measure a temperature of the inductor coil. In another example, there is provided an aerosol provision device, comprising an insulating member surrounding a susceptor, a resilient component adhered to the insulating member, and a temperature sensor at least partially contained within the resilient component, wherein the temperature sensor is configured to measure a temperature of the insulating member. In another example, there is provided an aerosol provision device, comprising an electrical component, a resilient component adhered to the electrical component, and a temperature sensor at least partially contained within the resilient component, wherein the temperature sensor is configured to measure a temperature of the electrical component. In these examples, the temperature sensor may or may not contact the component which it is being used to measure. The device and resilient component may have any of the features described above or herein.

Preferably, the device is a tobacco heating device, also known as a heat-not-burn device.

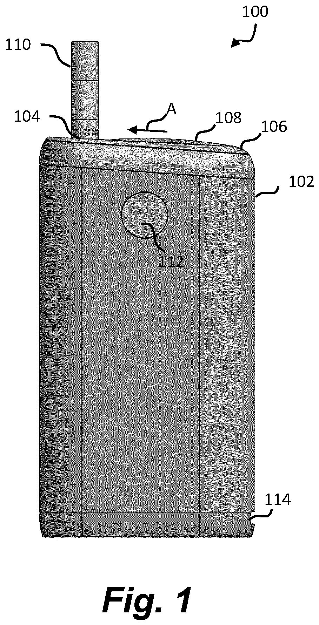

Figure 1 shows an example of an aerosol provision device 100 for generating aerosol from an aerosol generating medium/material. In broad outline, the device 100 may be used to heat a replaceable article 110 comprising the aerosol generating medium, to generate an aerosol or other inhalable medium which is inhaled by a user of the device 100.

The device 100 comprises a housing 102 (in the form of an outer cover) which surrounds and houses various components of the device 100. The device 100 has an opening 104 in one end, through which the article 110 may be inserted for heating by a heating assembly. In use, the article 110 may be fully or partially inserted into the heating assembly where it may be heated by one or more components of the heater assembly.

The device 100 of this example comprises a first end member 106 which comprises a lid 108 which is moveable relative to the first end member 106 to close the opening 104 when no article 110 is in place. In Figure 1, the lid 108 is shown in an open configuration, however the lid 108 may move into a closed configuration. For example, a user may cause the lid 108 to slide in the direction of arrow "A".

The device 100 may also include a user-operable control element 112, such as a button or switch, which operates the device 100 when pressed. For example, a user may turn on the device 100 by operating the switch 112.

The device 100 may also comprise an electrical component, such as a socket/port 114, which can receive a cable to charge a battery of the device 100. For example, the socket 114 may be a charging port, such as a USB charging port.

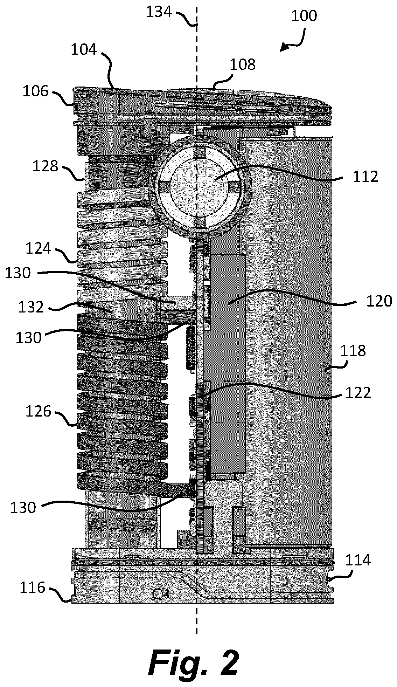

Figure 2 depicts the device 100 of Figure 1 with the outer cover 102 removed and without an article 110 present. The device 100 defines a longitudinal axis 134.

As shown in Figure 2, the first end member 106 is arranged at one end of the device 100 and a second end member 116 is arranged at an opposite end of the device 100. The first and second end members 106, 116 together at least partially define end surfaces of the device 100. For example, the bottom surface of the second end member 116 at least partially defines a bottom surface of the device 100. Edges of the outer cover 102 may also define a portion of the end surfaces. In this example, the lid 108 also defines a portion of a top surface of the device 100.

The end of the device closest to the opening 104 may be known as the proximal end (or mouth end) of the device 100 because, in use, it is closest to the mouth of the user. In use, a user inserts an article 110 into the opening 104, operates the user control 112 to begin heating the aerosol generating material and draws on the aerosol generated in the device. This causes the aerosol to flow through the device 100 along a flow path towards the proximal end of the device 100.

The other end of the device furthest away from the opening 104 may be known as the distal end of the device 100 because, in use, it is the end furthest away from the mouth of the user. As a user draws on the aerosol generated in the device, the aerosol flows away from the distal end of the device 100.

The device 100 further comprises a power source 118. The power source 118 may be, for example, a battery, such as a rechargeable battery or a non-rechargeable battery. Examples of suitable batteries include, for example, a lithium battery (such as a lithium-ion battery), a nickel battery (such as a nickel-cadmium battery), and an alkaline battery. The battery is electrically coupled to the heating assembly to supply electrical power when required and under control of a controller (not shown) to heat the aerosol generating material. In this example, the battery is connected to a central support 120 which holds the battery 118 in place. The central support 120 may also be known as a battery support, or battery carrier.

The device further comprises at least one electronics module 122. The electronics module 122 may comprise, for example, a printed circuit board (PCB). The PCB 122 may support at least one controller, such as a processor, and memory. The PCB 122 may also comprise one or more electrical tracks to electrically connect together various electronic components of the device 100. For example, the battery terminals may be electrically connected to the PCB 122 so that power can be distributed throughout the device 100. The socket 114 may also be electrically coupled to the battery via the electrical tracks.

In the example device 100, the heating assembly is an inductive heating assembly and comprises various components to heat the aerosol generating material of the article 110 via an inductive heating process. Induction heating is a process of heating an electrically conducting object (such as a susceptor) by electromagnetic induction. An induction heating assembly may comprise an inductive element, for example, one or more inductor coils, and a device for passing a varying electric current, such as an alternating electric current, through the inductive element. The varying electric current in the inductive element produces a varying magnetic field. The varying magnetic field penetrates a susceptor suitably positioned with respect to the inductive element, and generates eddy currents inside the susceptor. The susceptor has electrical resistance to the eddy currents, and hence the flow of the eddy currents against this resistance causes the susceptor to be heated by Joule heating. In cases where the susceptor comprises ferromagnetic material such as iron, nickel or cobalt, heat may also be generated by magnetic hysteresis losses in the susceptor, i.e. by the varying orientation of magnetic dipoles in the magnetic material as a result of their alignment with the varying magnetic field. In inductive heating, as compared to heating by conduction for example, heat is generated inside the susceptor, allowing for rapid heating. Further, there need not be any physical contact between the inductive heater and the susceptor, allowing for enhanced freedom in construction and application.

The induction heating assembly of the example device 100 comprises a susceptor arrangement 132 (herein referred to as "a susceptor"), a first inductor coil 124 and a second inductor coil 126. The first and second inductor coils 124, 126 are made from an electrically conducting material. In this example, the first and second inductor coils 124, 126 are made from Litz wire/cable which is wound in a helical fashion to provide helical inductor coils 124, 126. Litz wire comprises a plurality of individual wires which are individually insulated and are twisted together to form a single wire. Litz wires are designed to reduce the skin effect losses in a conductor. In the example device 100, the first and second inductor coils 124, 126 are made from copper Litz wire which has a rectangular cross section. In other examples the Litz wire can have other shape cross sections, such as circular.

The first inductor coil 124 is configured to generate a first varying magnetic field for heating a first section of the susceptor 132 and the second inductor coil 126 is configured to generate a second varying magnetic field for heating a second section of the susceptor 132. In this example, the first inductor coil 124 is adjacent to the second inductor coil 126 in a direction along the longitudinal axis 134 of the device 100 (that is, the first and second inductor coils 124, 126 to not overlap). The susceptor arrangement 132 may comprise a single susceptor, or two or more separate susceptors. Ends 130 of the first and second inductor coils 124, 126 can be connected to the PCB 122.

It will be appreciated that the first and second inductor coils 124, 126, in some examples, may have at least one characteristic different from each other. For example, the first inductor coil 124 may have at least one characteristic different from the second inductor coil 126. More specifically, in one example, the first inductor coil 124 may have a different value of inductance than the second inductor coil 126. In Figure 2, the first and second inductor coils 124, 126 are of different lengths such that the first inductor coil 124 is wound over a smaller section of the susceptor 132 than the second inductor coil 126. Thus, the first inductor coil 124 may comprise a different number of turns than the second inductor coil 126 (assuming that the spacing between individual turns is substantially the same). In yet another example, the first inductor coil 124 may be made from a different material to the second inductor coil 126. In some examples, the first and second inductor coils 124, 126 may be substantially identical.

In this example, the first inductor coil 124 and the second inductor coil 126 are wound in opposite directions. This can be useful when the inductor coils are active at different times. For example, initially, the first inductor coil 124 may be operating to heat a first section of the article 110, and at a later time, the second inductor coil 126 may be operating to heat a second section of the article 110. Winding the coils in opposite directions helps reduce the current induced in the inactive coil when used in conjunction with a particular type of control circuit. In Figure 2, the first inductor coil 124 is a right-hand helix and the second inductor coil 126 is a left-hand helix. However, in another embodiment, the inductor coils 124, 126 may be wound in the same direction, or the first inductor coil 124 may be a left-hand helix and the second inductor coil 126 may be a right-hand helix.

The susceptor 132 of this example is hollow and therefore defines a receptacle within which aerosol generating material is received. For example, the article 110 can be inserted into the susceptor 132. In this example the susceptor 120 is tubular, with a circular cross section.

The device 100 of Figure 2 further comprises an insulating member 128 which may be generally tubular and at least partially surround the susceptor 132. The insulating member 128 may be constructed from any insulating material, such as plastic for example. In this particular example, the insulating member is constructed from polyether ether ketone (PEEK). The insulating member 128 may help insulate the various components of the device 100 from the heat generated in the susceptor 132.

The insulating member 128 can also fully or partially support the first and second inductor coils 124, 126. For example, as shown in Figure 2, the first and second inductor coils 124, 126 are positioned around the insulating member 128 and are in contact with a radially outward surface of the insulating member 128. In some examples the insulating member 128 does not abut the first and second inductor coils 124, 126. For example, a small gap may be present between the outer surface of the insulating member 128 and the inner surface of the first and second inductor coils 124, 126.

In a specific example, the susceptor 132, the insulating member 128, and the first and second inductor coils 124, 126 are coaxial around a central longitudinal axis of the susceptor 132.

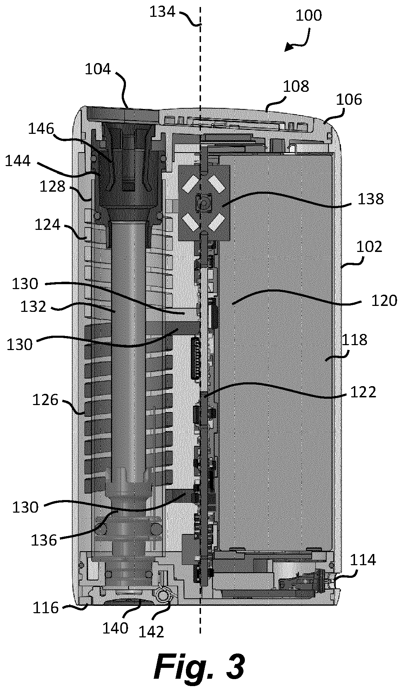

Figure 3 shows a side view of device 100 in partial cross-section. The outer cover 102 is present in this example. The rectangular cross-sectional shape of the first and second inductor coils 124, 126 is more clearly visible.

The device 100 further comprises a support 136 which engages one end of the susceptor 132 to hold the susceptor 132 in place. The support 136 is connected to the second end member 116.

The device may also comprise a second printed circuit board 138 associated within the control element 112.

The device 100 further comprises a second lid/cap 140 and a spring 142, arranged towards the distal end of the device 100. The spring 142 allows the second lid 140 to be opened, to provide access to the susceptor 132. A user may open the second lid 140 to clean the susceptor 132 and/or the support 136.

The device 100 further comprises an expansion chamber 144 which extends away from a proximal end of the susceptor 132 towards the opening 104 of the device. Located at least partially within the expansion chamber 144 is a retention clip 146 to abut and hold the article 110 when received within the device 100. The expansion chamber 144 is connected to the end member 106.

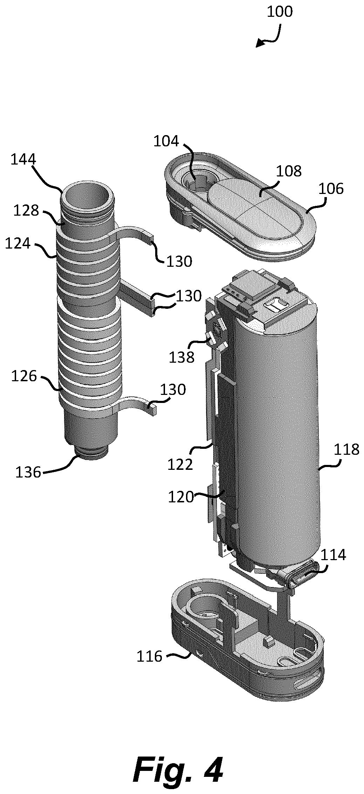

Figure 4 is an exploded view of the device 100 of Figure 1, with the outer cover 102 omitted.

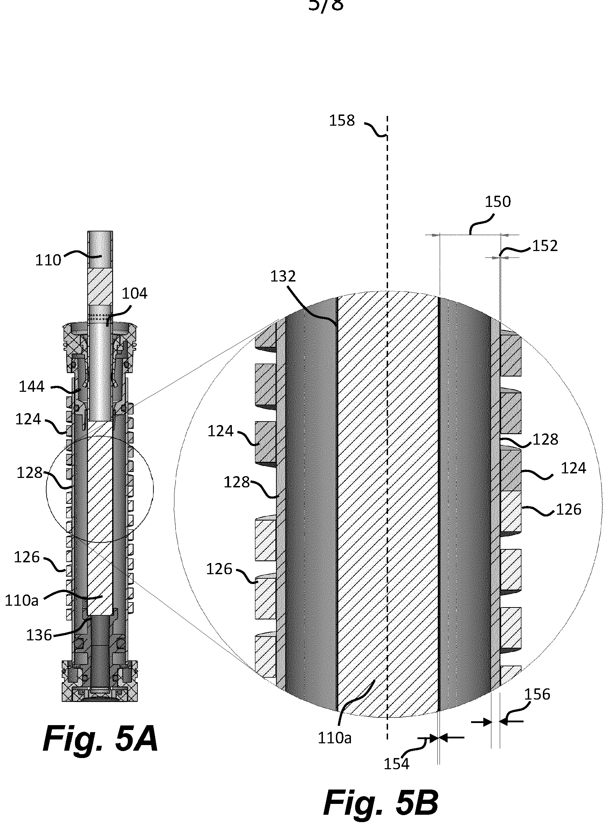

Figure 5A depicts a cross section of a portion of the device 100 of Figure 1. Figure 5B depicts a close-up of a region of Figure 5A. Figures 5A and 5B show the article 110 received within the susceptor 132, where the article 110 is dimensioned so that the outer surface of the article 110 abuts the inner surface of the susceptor 132. This ensures that the heating is most efficient. The article 110 of this example comprises aerosol generating material 110a. The aerosol generating material 110a is positioned within the susceptor 132. The article 110 may also comprise other components such as a filter, wrapping materials and/or a cooling structure.

Figure 5B shows that the outer surface of the susceptor 132 is spaced apart from the inner surface of the inductor coils 124, 126 by a distance 150, measured in a direction perpendicular to a longitudinal axis 158 of the susceptor 132. In one particular example, the distance 150 is about 3mm to 4mm, about 3mm to 3.5mm, or about 3.25mm.

Figure 5B further shows that the outer surface of the insulating member 128 is spaced apart from the inner surface of the inductor coils 124, 126 by a distance 152, measured in a direction perpendicular to a longitudinal axis 158 of the susceptor 132. In one particular example, the distance 152 is about 0.05mm. In another example, the distance 152 is substantially 0mm, such that the inductor coils 124, 126 abut and touch the insulating member 128.

In one example, the susceptor 132 has a wall thickness 154 of about 0.025mm to 1mm, or about 0.05mm.

In one example, the susceptor 132 has a length of about 40mm to 60mm, about 40mm to 45mm, or about 44.5mm.

In one example, the insulating member 128 has a wall thickness 156 of about 0.25mm to 2mm, 0.25mm to 1mm, or about 0.5mm.

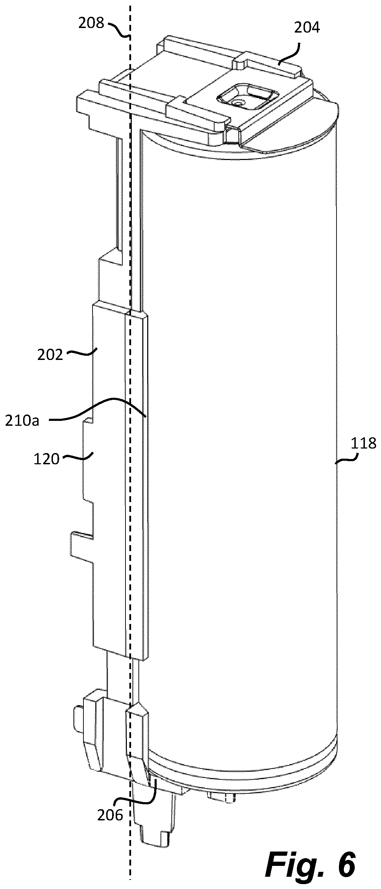

Figure 6 depicts the battery support 120 of Figures 2 and 4 in more detail. The battery support 120 comprises a main portion 202, a first end portion 204 and a second end portion 206. The main portion 202 defines a longitudinal axis 208, which is parallel to the longitudinal axis 134 of the device 100. The first end portion 204 is arranged at a first end of the main portion 202 and the second end portion 206 is arranged at a second end of the main portion 202. The first and second end portions 204, 206 extend away from a first, front side of the main portion 202 in a direction that is substantially perpendicular to the longitudinal axis 208.

As shown, the battery 118 is connected to the battery support 120. When connected to the battery support 120, the battery 118 is held between the first and second end portions 204, 206. For example, a top end of the battery 118 is received by the first end portion 204, and a bottom end of the battery 118 is received by the second end portion 206.

Although not shown in Figure 6, the PCB 122 may be engaged with a second, rear side of the main portion 202.

As described above, the aerosol provision device 100 comprises a heater/heating assembly comprising at least one inductor coil 124, 126. Figure 4 depicts the arrangement of the one or more inductor coils 124, 126 relative to the battery support 120. The heater assembly is positioned on the second side of the main portion 202, and the battery support 120 is positioned between the battery 118 and the heater assembly.

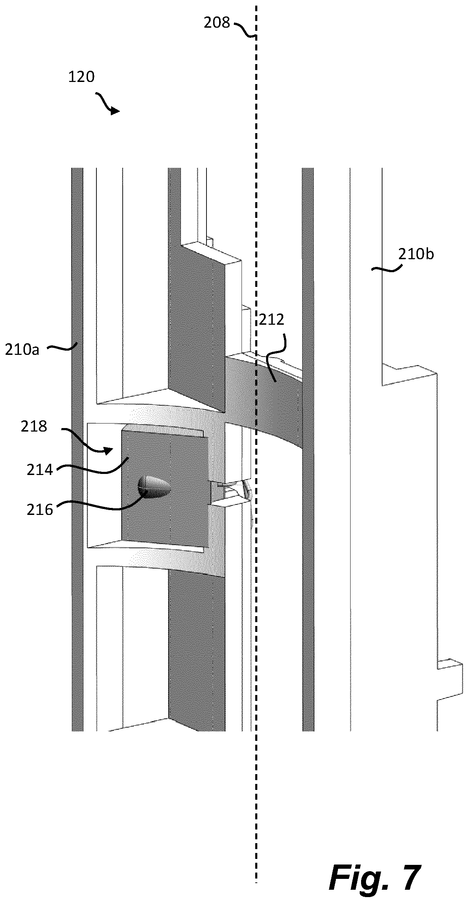

In the example of Figure 6, the first side of the main portion 202 comprises two opposing side walls 210a, 210b and a base portion. In Figure 6 only the first side wall 210a is visible; the second side wall 210b and the base portion 212 are obscured from view by the battery 118, but are visible in Figure 7.

Figure 7 shows a close up of a portion of the battery support 120 with the battery 118 removed. Here the first side wall 210a and the second side wall 210b are visible. The base portion 212 extends between the two side walls 210a, 210b such that the two side walls 210a, 210b extend along the length of the base portion 212 in a direction parallel to the axis 208. The two side walls 210a, 210b also extend away from the base portion 212. When the battery 118 is connected to the battery support 120, the battery 118 is received between the two side walls 210a, 210b.

In this particular example, the base portion 212 delimits an opening between the first side of the main portion 202 and the second side of the main portion 202. Thus, there is a hole/cut-out through the main portion 202 such that the base portion 212 is mainly a "void". This can allow the underside of the PCB 122 to be accessed. The opening may comprise a plurality of through holes, rather than a single through hole. For example, the base portion 212 may comprise one or more dividing structures which segment the opening into two or more through holes. In other examples, the base portion 212 is solid, so that there is no opening through the main portion 202.

Figure 7 further shows a resilient component 214 adhered to the battery support 120. When the battery 118 is connected to the battery support 120, the resilient component is arranged between the battery support 120 and the battery 118. Partially contained within the resilient component 214 is a temperature sensor 216.

In this example, a portion of the temperature sensor 216 is exposed while another portion of the temperature sensor 216 is embedded within the resilient component 214. The exposed portion 216 may abut the battery 118. Alternatively, the resilient component 214 may abut the battery. In another example the whole of the temperature sensor 216 may be embedded within the resilient component 214. One or more wires which connect the temperature sensor 216 to other components of the device 100, such as the PCB 122 may also be embedded within the resilient component 214.

The temperature sensor 216 of this example is a thermistor, however other temperature sensors may be used instead. When the battery 118 is connected to the battery support 120 the temperature sensor 216 and/or resilient component 214 is in contact with the battery 118. This allows the temperature of the battery 118 to be measured. A controller may receive a signal from the temperature sensor 216 to measure or deduce a temperature of the battery 118. Appropriate actions can be made by the controller based on the measured temperature. For example, if the temperature is too hot, the heater assembly may be switched off.

As shown, the resilient component 214 is adhered to an inner surface of the first side wall 210a. The side wall 210a has a curved profile which conforms to the curved outer surface of the battery 118. In other examples the resilient component 214 may be adhered to another portion of the battery support. For example, the resilient component 214 may be adhered to the second side wall 210b, the base portion 212, or one of the first and second end portions 204, 206.

Preferably the resilient component 214 is silicone, such as silicone rubber. Silicone has a high thermal conductivity and can be deformed with the application of a force. The resilient nature of the silicone allows the resilient component 214 to be compressed without causing the positioning of the temperature sensor 216 relative to the battery 118 to permanently change.

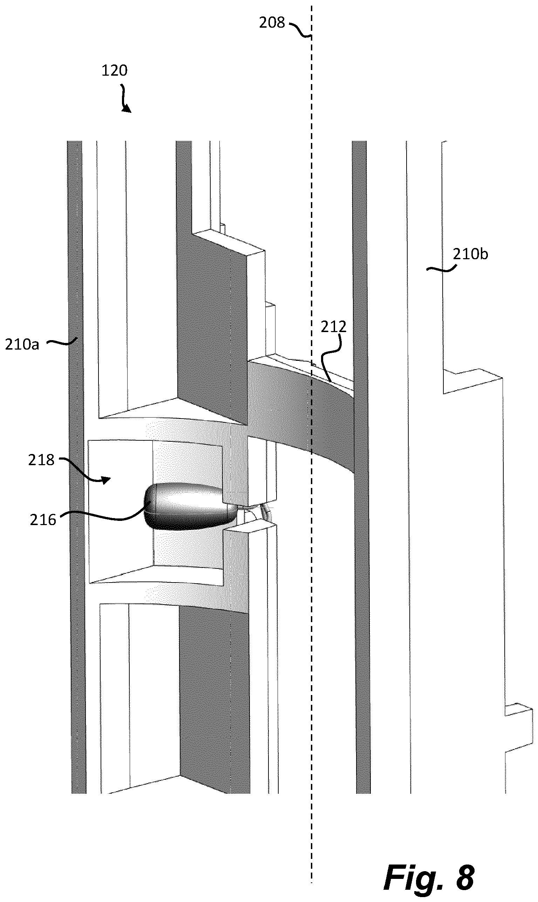

In this particular example, the battery support 120 defines a receptacle/cavity 218 within which the resilient component 214 is located. The receptacle 218 retains the resilient component 214 such that the temperature sensor 216 can be better positioned relative to the battery 118. The resilient component 214 may fill the receptacle 218 as it is dispensed into the receptacle 218 and may "set" or cure over time. Figure 8 depicts the battery support 120 and receptacle 218 before the resilient component 214 is introduced into the receptacle 218.

In some examples, the resilient component is adhered to the battery support. This allows the temperature sensor to be held in place. Preferably the resilient component 214 is self-adhesive such that it adheres by itself to the battery support 210 without the need for an additional adhesive. This can result in a bond which is less likely to separate. Silicone is a material which is initially adhesive before it has cured. In some examples the resilient component 214 is not adhered to the battery 118. Thus, the resilient component 214 may be dispensed into the receptacle 218 and be cured before the battery 118 is attached to the battery support 120. This allows the battery 218 to be easily removed, and allows the battery 118 to move relative to the resilient component 214.

The above embodiments are to be understood as illustrative examples of the invention. Further embodiments of the invention are envisaged. It is to be understood that any feature described in relation to any one embodiment may be used alone, or in combination with other features described, and may also be used in combination with one or more features of any other of the embodiments, or any combination of any other of the embodiments.

## Claims

1. An aerosol provision device (100), comprising:
a battery (118);
a battery support (120) configured to engage and hold the battery (118);
a resilient component (214) arranged between the battery support (120) and the battery (118); and
a temperature sensor (216) at least partially contained within the resilient component (214), wherein the temperature sensor (216) is configured to measure a temperature of the battery (118); and
wherein at least one of the temperature sensor (216) and resilient component (214) abuts the battery (118).

2. An aerosol provision device (100) according to claim 1, wherein the resilient component (214) is thermally conductive.

3. An aerosol provision device (100) according to claim 1 or 2, wherein the temperature sensor (216) is fully contained within the resilient component (214), and the resilient component (214) abuts the battery (118).

4. An aerosol provision device (100) according to claim 1 or 2, wherein a first portion of the temperature sensor (216) is contained within the resilient component (214) and a second portion of the temperature sensor (216) abuts the battery (118).

5. An aerosol provision device (100) according to any of claims 1 to 4, wherein the battery support (120) defines a receptacle (218), and the resilient component (214) is received within the receptacle (218).

6. An aerosol provision device according to any of claims 1 to 5, wherein the resilient component (214) comprises silicone.

7. An aerosol provision device (100) according to any of claims 1 to 6, wherein the resilient component (214) has a thermal conductivity of greater than about 5W/mK.

8. An aerosol provision device (100) according to any of claims 1 to 7, wherein the resilient component (214) has a thermal conductivity of greater than about 5W/mK and less than about 10W/mK.

9. An aerosol provision device (100) according to any of claims 1 to 7, wherein the resilient component (214) contacts the battery (118) over an area of between about 15mm² and about 25mm².

10. An aerosol provision device (100) according to any of claims 1 to 9, further comprising:
a heater assembly configured to heat aerosol generating material (110a); and
a controller, wherein the controller is configured to:
cause the heater assembly to start heating the aerosol generating material (110a);
determine, based on the temperature measured by the temperature sensor (216), whether the temperature of the battery (118) exceeds a first threshold; and
if it is determined that the temperature of the battery (118) exceeds the first threshold, cause the heater assembly to stop heating the aerosol generating material (110a).

11. An aerosol provision device (100) according to claim 10, wherein the first threshold is between about 30 °C and about 40 °C.

12. An aerosol provision device (100) according to claim 10 or 11, wherein the controller is configured to:
cause the heater assembly to start heating the aerosol generating material (110a) only if it is determined that the temperature of the battery (118) is below a second threshold;
wherein the second threshold is less than the first threshold.

13. An aerosol provision device (100) according to claim 12, wherein the second threshold is between about 5 °C and about 10 °C less than the first threshold.

14. An aerosol provision system, comprising:
an aerosol provision device (100) according to any of claims 1 to 13; and
an article comprising aerosol generating material (110a).

## Patentansprüche

1. Aerosolbereitstellungsvorrichtung (100), umfassend:
eine Batterie (118);
eine Batteriehalterung (120), die konfiguriert ist, um die Batterie (118) in Eingriff zu nehmen und zu halten;
ein elastisches Bauteil (214), das zwischen der Batteriehalterung (120) und der Batterie (118) angeordnet ist; und
einen Temperatursensor (216), der zumindest teilweise in dem elastischen Bauteil (214) enthalten ist, wobei der Temperatursensor (216) konfiguriert ist, um eine T
emperatur der Batterie (118) zu messen; und
wobei zumindest eines von dem Temperatursensor (216) und dem elastischen Bauteil (214) an der Batterie (118) anliegt.

2. Aerosolbereitstellungsvorrichtung (100) nach Anspruch 1, wobei das elastische Bauteil (214) wärmeleitend ist.

3. Aerosolbereitstellungsvorrichtung (100) nach Anspruch 1 oder 2, wobei der Temperatursensor (216) vollständig in dem elastischen Bauteil (214) enthalten ist, und das elastische Bauteil (214) an der Batterie (118) anliegt.

4. Aerosolbereitstellungsvorrichtung (100) nach Anspruch 1 oder 2, wobei ein erster Abschnitt des Temperatursensors (216) in dem elastischen Bauteil (214) enthalten ist, und ein zweiter Abschnitt des Temperatursensors (216) an der Batterie (118) anliegt.

5. Aerosolbereitstellungsvorrichtung (100) nach einem der Ansprüche 1 bis 4, wobei die Batteriehalterung (120) eine Aufnahme (218) definiert, und das elastische Bauteil (214) in der Aufnahme (218) aufgenommen ist.

6. Aerosolbereitstellungsvorrichtung nach einem der Ansprüche 1 bis 5, wobei das elastische Bauteil (214) Silikon umfasst.

7. Aerosolbereitstellungsvorrichtung (100) nach einem der Ansprüche 1 bis 6, wobei das elastische Bauteil (214) eine Wärmeleitfähigkeit von mehr als etwa 5W/mK aufweist.

8. Aerosolbereitstellungsvorrichtung (100) nach einem der Ansprüche 1 bis 7, wobei das elastische Bauteil (214) eine Wärmeleitfähigkeit von mehr als etwa 5W/mK und weniger als etwa 10W/mK aufweist.

9. Aerosolbereitstellungsvorrichtung (100) nach einem der Ansprüche 1 bis 7, wobei das elastische Bauteil (214) die Batterie (118) über eine Fläche von zwischen etwa 15 mm² und etwa 25 mm²berührt.

10. Aerosolbereitstellungsvorrichtung (100) nach einem der Ansprüche 1 bis 9, weiter umfassend:
eine Heizanordnung, die konfiguriert ist, um aerosolerzeugendes Material (110a) zu erhitzen; und
eine Steuereinheit, wobei die Steuereinheit konfiguriert ist, um:
die Heizanordnung zu veranlassen, mit dem Erhitzen des aerosolerzeugenden Materials (110a) zu beginnen;
basierend auf der vom Temperatursensor (216) gemessenen Temperatur zu bestimmen, ob die Temperatur der Batterie (118) einen ersten Schwellenwert übersteigt; und
wenn bestimmt wird, dass die Temperatur der Batterie (118) den ersten Schwellenwert übersteigt, die Heizanordnung zu veranlassen, das Erhitzen des aerosolerzeugenden Materials (110a) zu stoppen.

11. Aerosolbereitstellungsvorrichtung (100) nach Anspruch 10, wobei der erste Schwellenwert zwischen etwa 30 °C und etwa 40 °C liegt.

12. Aerosolbereitstellungsvorrichtung (100) nach Anspruch 10 oder 11, wobei die Steuereinheit konfiguriert ist, um:
die Heizanordnung zu veranlassen, mit dem Erhitzen des aerosolerzeugenden Materials (110a) nur dann zu beginnen, wenn bestimmt wird, dass die Temperatur der Batterie (118) unter einem zweiten Schwellenwert liegt;
wobei der zweite Schwellenwert geringer als der erste Schwellenwert ist.

13. Aerosolbereitstellungsvorrichtung (100) nach Anspruch 12, wobei der zweite Schwellenwert zwischen etwa 5 °C und etwa 10 °C geringer als der erste Schwellenwert ist.

14. Aerosolbereitstellungssystem, umfassend:
eine Aerosolbereitstellungsvorrichtung (100) nach einem der Ansprüche 1 bis 13; und
einen Artikel, der aerosolerzeugendes Material (110a) umfasst.

## Revendications

1. Dispositif de fourniture d'aérosol (100), comprenant :
une batterie (118) ;
un support (120) de batterie configuré pour venir en prise avec et maintenir la batterie (118) ;
un composant souple (214) agencé entre le support (120) de batterie et la batterie (118) ; et
un capteur de température (216) au moins partiellement contenu dans le composant souple (214), dans lequel le capteur de température (216) est configuré pour mesurer une température de la batterie (118) ; et
dans lequel au moins l'un parmi le capteur de température (216) et le composant souple (214) vient en butée contre la batterie (118).

2. Dispositif de fourniture d'aérosol (100) selon la revendication 1, dans lequel le composant souple (214) est thermoconducteur.

3. Dispositif de fourniture d'aérosol (100) selon la revendication 1 ou 2, dans lequel le capteur de température (216) est entièrement contenu à l'intérieur du composant souple (214), et le composant souple (214) vient en butée contre la batterie (118).

4. Dispositif de fourniture d'aérosol (100) selon la revendication 1 ou 2, dans lequel une première partie du capteur de température (216) est contenue à l'intérieur du composant souple (214) et une seconde partie du capteur de température (216) vient en butée contre la batterie (118).

5. Dispositif de fourniture d'aérosol (100) selon l'une quelconque des revendications 1 à 4, dans lequel le support (120) de batterie définit un logement (218), et le composant souple (214) est reçu à l'intérieur du logement (218).

6. Dispositif de fourniture d'aérosol selon l'une quelconque des revendications 1 à 5, dans lequel le composant souple (214) comprend de la silicone.

7. Dispositif de fourniture d'aérosol (100) selon l'une quelconque des revendications 1 à 6, dans lequel le composant souple (214) présente une conductivité thermique supérieure à environ 5 W/mK.

8. Dispositif de fourniture d'aérosol (100) selon l'une quelconque des revendications 1 à 7, dans lequel le composant souple (214) présente une conductivité thermique supérieure à environ 5 W/mK et inférieure à environ 10 W/mK.

9. Dispositif de fourniture d'aérosol (100) selon l'une quelconque des revendications 1 à 7, dans lequel le composant souple (214) est en contact avec la batterie (118) sur une zone comprise entre environ 15 mm² et environ 25 mm².

10. Dispositif de fourniture d'aérosol (100) selon l'une quelconque des revendications 1 à 9, comprenant en outre :
un ensemble chauffant configuré pour chauffer un matériau de génération d'aérosol (110a) ; et
un dispositif de commande, dans lequel le dispositif de commande est configuré pour :
amener l'ensemble chauffant à commencer à chauffer le matériau de génération d'aérosol (110a) ;
déterminer, sur la base de la température mesurée par le capteur de température (216), si la température de la batterie (118) dépasse un premier seuil ; et
s'il est déterminé que la température de la batterie (118) dépasse le premier seuil, amener l'ensemble chauffant à arrêter de chauffer le matériau de génération d'aérosol (110a).

11. Dispositif de fourniture d'aérosol (100) selon la revendication 10, dans lequel le premier seuil est compris entre environ 30 °C et environ 40 °C.

12. Dispositif de fourniture d'aérosol (100) selon la revendication 10 ou 11, dans lequel le dispositif de commande est configuré pour :
amener l'ensemble chauffant à commencer à chauffer le matériau de génération d'aérosol (110a) uniquement s'il est déterminé que la température de la batterie (118) est inférieure à un second seuil ;
dans lequel le second seuil est inférieur au premier seuil.

13. Dispositif de fourniture d'aérosol (100) selon la revendication 12, dans lequel le second seuil est entre environ 5 °C et environ 10 °C inférieur au premier seuil.

14. Système de fourniture d'aérosol, comprenant :
un dispositif de fourniture d'aérosol (100) selon l'une quelconque des revendications 1 à 13 ; et
un article comprenant un matériau de génération d'aérosol (110a).
